# EUROPEAN PATENT SPECIFICATION

(11) **EP 2 221 647 B1**
(45) Date of publication and mention of the grant of the patent: **11.04.2018**
(21) Application number: 10001710.2
(22) Date of filing: 19.02.2010
(51) Int. Cl.: G02B 6/44

(54) **A cable including elements for extraction and an associated method of fabrication**
Kabel mit Elementen zur Extraktion und dazugehöriges Herstellungsverfahren
Câble incluant des éléments pour extraction et procédé de fabrication associé

(30) Priority: 23.02.2009 FR 0900815
(43) Date of publication of application: 25.08.2010
(73) Proprietor: Draka Comteq B.V., 1083 HJ Amsterdam (NL)
(72) Inventor: Tatat, Olivier, 62231 Sangatte (FR); Nothofer, Klaus, 40699 Erkrath (DE)
(74) Representative: Algemeen Octrooi- en Merkenbureau B.V.

(56) References cited:
- EP-A1- 0 949 635
- EP-A1- 1 818 703
- EP-A1- 1 921 478
- WO-A1-01/98810
- WO-A1-2005/040882
- GB-A- 2 221 080
- US-A1- 2004 120 666
- US-A1- 2005 031 277
- US-B1- 6 845 200

## Description

The present invention relates to the field of cables. More precisely, the present invention relates to the field of cables, said cables including elements that are to be extracted from the cable.

The elements extend side-by-side in parallel within the cable and they are left free in the cavity formed by the inside wall of the cable, so that an operator can extract them easily from the cable. The elements can freely move within the cavity of the cable.

By way of non-limiting example, such cables are used for optical fiber telecommunications networks. The elements may in that case for example be optical modules, comprising one or more optical fibers. In order to serve different buildings, the optical modules are elements that are designed to be extracted from the cable, and for this purpose they need to be accessible. For this purpose, an operator makes an opening in the cable in order to extract one or more modules that are then taken to the building that is to be served. Other optical modules can remain within the cable to be taken out for example at the next building.

Other applications of the cable are also possible.

When an operator in the field seeks to extract a length of a element or a module from the present cable, the length of element or module that can be extracted is limited by several factors.

By way of example, one of the factors to be taken into account is the packing ratio of the elements or modules in the cable. The packing ratio is defined as the ratio of the sum of the cross-sections of all of the elements or modules divided by the section (cross-section area) of the cavity in which the elements or modules are located.

Other factors to be taken into account for determining the extraction length are the coefficient of friction between two elements or modules on one hand and the coefficient of friction between an element or a module and the wall of the cavity (or the tape) on the other hand.

By way of example, document EP 1 921 478 discloses a cable comprising an outer sheath surrounding a cavity in which optical modules are located. This cable proposes a maximum packing ratio of 0.7, with said ratio preferably lying in the range 0.3 to 0.35. In combination, that document describes the use of a solid lubricant, e.g. talc, placed within the cavity in order to reduce the coefficient of friction between two modules and the reduce the coefficient of friction between a module and the wall of the cavity.

For this cable according to EP 1 921 478 the modules that are used (e.g. made of polyester based on thermoplastic elastomers, plasticized PVC, ...) present coefficients of friction relative to the cable that are high in the absence of lubricant. The cable with lubricant also presents several drawbacks. It requires a large amount of solid lubricant to be provided in the cavity to ensure that lubricant is present at all places between two modules. Furthermore, although the length of module that can be extracted may reach 30 meters (m), which is sufficient to enable a cable to be installed in an external duct such as a sewer, that length is not sufficient for all types of application. Proposals have also been made to use materials such as polyester or polyamide for the modules in order to reduce their coefficients of friction relative to the cable. Thus, if a solid lubricant is also provided in the cavity containing the modules but in insufficient quantity, or non-uniformly distributed around the modules, this absence of solid lubricant can be mitigated in part so as to retain an extraction length that is acceptable for the application. It will nevertheless be understood that it can happen that an optical module cannot be extracted from the cable over a sufficient length, thereby retarding or even preventing a branch connection being put into place using such a module. More generally, the same also applies to any cable element disposed in a cavity constituted by the outer sheath of the cable.

A similar cable is disclosed in WO0198810 where parallel extending optical modules containing one or several optical fibres held in a thin, low friction, and easy tearable sheath are located in the internal cavity of an outer cable jacket.

Non dry lubricants for improving cable element movements in the form of silicone oil respective dimethylsiloxane are known alternatives to the lubricant of EP1921478 (US6845200, EP0949635). Also known in the field of cables is the provision of polyamide 12 as an abrasion resistent, low friction cable sheath material (EP1818703, GB2221080). An object of the present invention is to propose a cable having a cavity in which elements extending in parallel can be extracted in reliable manner over a predefined extraction length.

Furthermore, in certain applications, present requirements are to obtain cables from which an element for extraction can be extracted over lengths that are longer than existing extraction lengths.

Present solutions cited in the prior art do not enable extraction lengths of more than 30 m to be achieved, since the extraction force required becomes too great and generally leads to the extracted element being damaged or broken.

Another object of the invention is thus to propose a cable from which said elements can be extracted over lengths that are longer than those obtained at present.

The invention is defined in independent claim 1 and provides a cable comprising an outer sheath defining a longitudinal cavity having a wall wherein a plurality of elements extend in parallel within the cavity together with a lubricant, wherein the lubricant forms a film at least partially covering the outside surface of said elements, and wherein the elements comprise a sheath, said sheath being made of a thermoplastic polymer material having a hardness that is greater than 65 on the Shore D scale which is chosen as polyamide 12. In general, reduced friction between two polymers is obtained when said polymers have a low coefficient of friction. However, the present inventors found that the hardness of a polymer material likewise influences the force needed to extract an element from a cable. More in particular, a harder material, i.e. a material having a high shore hardness, leads to reduced sensitivity to deformation of the respective cable element made from said material. A reduced deformation results in less contact surface between neighbouring elements to which the element is pressed against. In turn, as a result of the reduced contact surface, the force needed to extract an element from a cable is likewise reduced when the material of said element exhibits an increased shore hardness. The lubricant according to the invention is a silicone oil, for example polydimethylsiloxane.

In an embodiment of the present invention the wall of the cavity is formed of a material selected from the group consisting of polyethylene, polypropylene, or a halogen-free flame retardant material.

In an embodiment of the present invention the wall of the cavity is formed of a halogen-free flame retardant material and he lubricant is selected so that the coefficient of friction between an element and the wall of the cavity is less than 0.2.

In an embodiment of the present invention the cable provides a tape that is interposed between the elements and the outer sheath. In other words, a tape is provided for covering the inside of the wall. Preferably the tape is a polyester tape.

In an embodiment of the present invention the packing ratio lies in the range 0.3 to 0.7, preferably in the range 0.3 to 0.5, where the packing ratio is defined as the ratio of the sum of the cross-sections of all of the elements divided by the section (cross-sectional area) of the cavity.

In an embodiment of the present invention a plurality of mechanical reinforcements are provided in the outer sheath of the cable, extending along the axis of the cable, i.e. the reinforcements extend longitudinaly within the outer sheath paralell to the axis of the cable and parralel to the elements.

In an embodiment of the present invention the elements are optical modules, each comprising at least one optical fiber. Preferably, the optical modules comprise several optical fibers.

In an embodiment of the present invention the elements are tight or semi-tight buffered optical fibres, i.e. the outside wall of the buffer tube being the sheath of the element.

In an embodiment of the present invention the elements are buffer tubes, i.e. the outside wall of the buffer tube being the sheath of the element.

In an embodiment of the present invention the elements are multi-fibre modules wherein several fibres are embedded in a seal and peel hotmelt covered with a polyamide 12 sheath. In an embodiment of the present invention the elements are micro modules covered with a polyamide 12 sheath The invention also provides a method of fabricating a cable of the invention, comprising the step of forming a film of a lubricant, said film covering, at least in part, the outside surfaces of the elements extending in parallel in a longitudinal cavity formed by an outer sheath of said cable. The lubricant is a silicone oil, for example polydimethylsiloxane.

In an embodiment of the fabrication method the step of forming the film of the lubricants comprises the substeps consisting in:
· casing the elements to pass through a mist of fine droplets formed from a stabilized emulsion of the lubricant in water; and
· evaporating the water or waiting for it to evaporate.

In an embodiment of the fabrication method the mist of fine droplets is formed from an emulsion comprising:
· water representing at least 95% by volume of the emulsion;
the lubricant in the form of oil, representing 1% to 2% by volume of the emulsion;
· a stabilizing agent representing 1% to 2% by volume of the emulsion.

All the embodiments disclosed for the cable are also applicable for the methods according to the present invention and vice versa.

The invention can be understood and other objects, advantages and characteristics thereof appear more clearly on reading the following description that is made with reference to the accompanying drawings, in which:
· Figure 1 is a section view of a telecommunications cable 10 provided with a plurality of optical fiber modules forming cable elements 1;
· Figure 2 is a diagram of a device for measuring coefficient of friction;
· Figure 3 plots tests concerning the coefficient of friction between two cable elements of the same kind for different types of materials, showing the influence of adjustment parameters of the Figure 2 device;
· Figure 4 plots the coefficients of friction between a polyamide 12 module and the wall of the cable cavity , said wall being made of various materials, and for each material of said wall, the figure shows the coefficients both with and without lubrication;
· Figure 5 plots the coefficients of friction between a copolyester thermoplastic elastomer module and the wall of the cable cavity, said wall being made of various materials, and for each material of said wall, the figure shows the coefficients both with and without a lubricant;
· Figure 6 plots the coefficients of friction between two modules made of the same material, firstly for polyamide 12 and secondly for copolyester thermoplastic elastomer, both with and without a lubricant, and for cables of different forms; and
· Figure 7 compares variation in the force required to extract a polyamide 12 element located in a cable having its cavity wall made of a first halogen-free flame-retardant material (material A), extraction being performed over a distance of 80 m, in the absence of lubricant in the cavity, and then with various lubricants.

The description below relates to an optical fiber telecommunications cable 10 including a plurality of optical modules as elements 1 that are to be extracted from the cable.

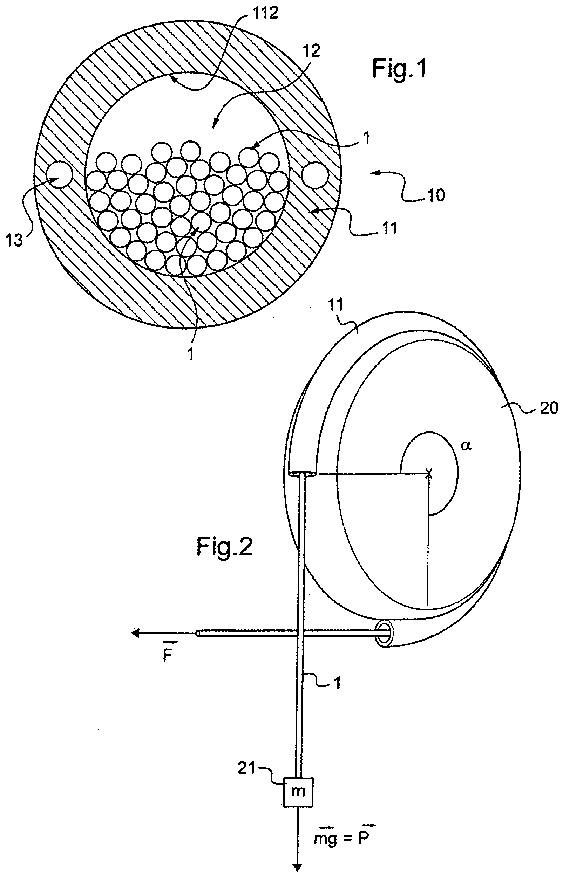

Figure 1 is a cross-section of a telecommunications cable 10 including a plurality of optical fiber modules 1.

The cable 10 comprises an outer sheath 11 defining a cavity 12 in which the optical fiber modules 1 are placed, which modules 1 extend in parallel in the cavity 12, freely relative to one another. In other words the elements 1, for example in the form modules, inside cavity 12 are not stranded or cabled. The cavity 12 has a wall 112 that may come into contact with several of the modules 1.

The cable 10 also has mechanical reinforcements 13 installed in the outer sheath 11 in order to limit axial deformation of the cable 10 in contraction and in expansion when the cable 10 is subjected to large variations in temperature or stress.

A module 1 is extracted as follows. Two cuts are made through the outer sheath 11 of the cable 10 at different points therealong in order to create a first opening via which at least one module 1 is cut, and a second opening through which said at least one previously-cut module 1 is extracted from the cable 10.

It will be understood that the length of module 1 that is extracted from the cable 10 corresponds to the distance between the two cuts made through the outer sheath 11 of the cable 10.

The optical modules 1 are covered at least in part in lubricant on their outside surfaces.

The lubricant is present in the form of a film. It thus presents thickness that is small compared with the outside dimensions of the optical modules 1. Given the quantity of lubricant used, it can be estimated that the thickness of the film will be less than 5 micrometers (µm), and in general less than 1 µm. This thickness should be compared with the diameter of an optical module 1 which is at least several hundreds of micrometers.

While making the modules 1, the lubricant is applied to the outside surfaces of the modules 1 in the form of an emulsion of oil in water, which emulsion is put into contact with the outside surfaces of the modules 1 in the form of a mist of fine droplets. After the water has evaporated, the lubricant then remains attached to the surfaces of the modules 1. The agent for stabilizing the emulsion also remains on the surfaces of the modules 1. Modules 1 are thus formed that include a film of lubricant on their outside surfaces.

The quantity of lubricant may be distributed uniformly over all of the modules 1 by the spray effect that is associated with implementing a mist of fine droplets. In general, this step is performed by causing the modules 1 to pass through a closed medium containing the mist. By controlling the duration of deposition, it is also possible to deposit the film with greater or smaller thickness.

This avoids the need to fill the cavity 12 with a lubricant, generally in solid form, in a quantity that is large and sufficient to ensure that all of the modules 1 present lubricant on their surfaces.

Furthermore, the fact that the film is attached to the outside surfaces of the modules 1 avoids any potential problem of the lubricant being distributed non-uniformly around the modules 1 in the cavity 12.

The lubricant used is a silicone oil, e.g. polydimethylsiloxane (PDMS), and tests as described below have shown that implementing the lubricant in the form of a film on the outside surfaces of the modules 1 makes it possible to achieve extraction lengths that are much longer than those that have been achieved before now.

These extraction lengths may exceed 50 m and may possibly exceed 80 m to 100 m.

The emulsion consists in a volume of water including about 1% to 2% of lubricant in the form of silicone oil together with about 1% to 2% stabilizing agent. By way of example, the stabilizing agent is a non-ionic surface-active agent, such as an agent of the ethoxylated tridecyl alcohol family. The emulsion presents a quantity of water that is greater than 95% by volume.

The present inventors have performed numerous experimental tests to verify the advantage of the invention. These tests were performed on various materials forming a module 1 or the wall 112 of the cavity 12.

The measurement device used for determining the coefficient of friction is itself well known, and the technique employed is in widespread use in the field of cables.

One such device is shown in Figure 2, in a variant embodiment suitable for determining the coefficient of friction between an optical module 1 and the outer sheath 11 of the cable 10 in which the module is inserted.

The technique consists in winding the cable around a stationary cylindrical core 20 and in suspending a mass 21 from one end of the optical module 1, which mass 21 thus exerts a weight P of known value on said end. The optical module 1 is then pulled from its other end with a force F so as to cause it to slide in the outer sheath 11 of the cable.

When the optical module slides, the force F is measured, e.g. with a dynamometer.

The force F depends on the weight P, on the angle α through which the cable is wound around the core 20 (this angle is 3Π/2 in Figure 2), and on the coefficient of friction.

Consequently, it is possible to determine the coefficient of friction by knowing the values of P, F, and α.

Variants of this device are used when it is desired to determine the coefficient of friction between two optical modules 1, or between the outer sheath 11 of the cable and a tape, usually a polyester tape, for covering the inside wall 112 of the cable cavity 12.

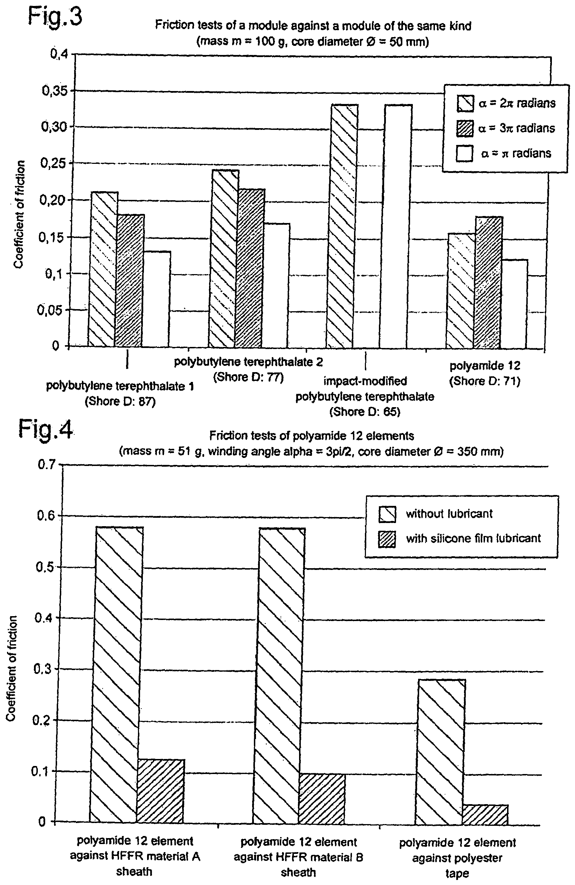

Tests performed with the Figure 1 device, or with one of its variants, are described with reference to Figures 3 to 6.

Figure 3 shows the results of experimental tests consisting in determining how the adjustment parameters of the device for measuring coefficients of friction have an influence on the value measured for the coefficient of friction.

The coefficients of friction as measured in this way were obtained between pairs of modules of the same kind.

Four materials were tested, namely: polybutylene terephthalate 1 (with hardness 87 on the Shore D scale), polybutylene terephthalate 2 (with hardness 77 on the Shore D scale), impact-modified polybutylene terephthalate (with hardness 65 on the Shore D scale), and polyamide 12 (with hardness 71 on the Shore D scale). Impact-modified polybutylene terephthalate is a polybutylene terephthalate (PBT) having mechanical characteristics that have been modified to improve its resistance to impact. For example, it may be PBT modified by adding more flexible polymers.

For each of the above-mentioned types of material, tests were performed under various conditions.

Under all circumstances, the diameter of the core 20 was ∅ = 50 millimeters (mm) and the mass 21 was m = 100 grams (g).

In contrast, several winding angles were tested, namely:
- a winding angle α = 3Π radians;
- a winding angle α = 2Π radians; and
- a winding angle α = Π radians.

Whatever the nature of the materials, it can be seen that the results diverge to some extent as a function of the winding angle α used. The contact area between two modules increases with increasing winding angle α of the modules around the core 20.

The results also diverge as a function of the diameter of the core 20, even though, theoretically, that ought not to be the case. These results are not shown. In order to make comparisons, it is therefore preferable to use a device with identical settings.

The tests described below with reference to Figures 4 to 6 were therefore carried out under identical conditions for the purpose of showing the advantage in terms of coefficient of friction presented by the lubricant implemented by the invention. More precisely, the mass 21 used was 51 g, the diameter of the core 20 was ∅ = 350 mm, and the winding angle was α = 3Π /2 radians.

Figure 4 shows the results of experimental tests consisting in determining the coefficient of friction of a polyamide 12 (PA12) module with various materials for the wall 112 of the cavity 12 of the cable 10, namely, respectively: a first halogen-free flame retardant material (material A - known under internal reference DHF9822 within the Applicant company); a second halogen-free flame retardant material (material B - Megolon S545 fabricated by the supplier Alphagary); and also a polyester film.

With the first two materials (material A, material B), the wall 112 corresponds to the inside wall of the outer sheath 11 of the cable 10. In contrast, with the third material (polyester), the wall 112 was in fact a polyester tape placed against the inside wall of the outer sheath 11 of the cable 10, the tape being in contact with the modules.

With a wall 112 of material A, using a lubricant of the invention enables the coefficient of friction to be reduced by a factor of about 4.8, the coefficient being 0.58 in the absence of lubricant and 0.125 in the presence of the lubricant of the invention.

With a wall 112 of material B, using a lubricant of the invention enables the coefficient of friction to be reduced by a factor of about 5.7, the coefficient being 0.57 in the absence of lubricant and 0.1 in the presence of the lubricant of the invention.

With a polyester tape covering the wall 112, using a lubricant of the invention enables the coefficient of friction to be reduced by a factor of about 7, the coefficient being 0.28 in the absence of lubricant and 0.04 in the presence of the lubricant of the invention.

The presence of the lubricant at the surface of the modules 1 thus enables the coefficients of friction between a PA12 module and the wall 112 of the cable cavity 12 to be reduced very greatly, and this applies regardless of the materials used for the wall 112 (reduction by a factor lying in the range 4.8 to 7).

Significant reductions in coefficient of friction between an example module made of copolyester thermoplastic elastomer, e.g. Arnitel®, not forming part of the present invention and the same materials (material A, material B, and polyester film) for the wall 112 of the cable cavity 12 have also been found.

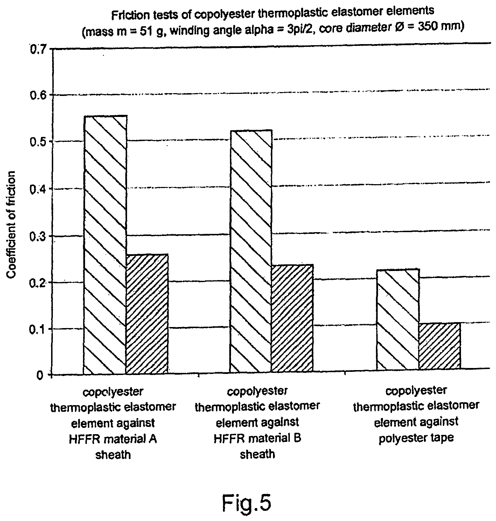

The results obtained under such conditions are given in Figure 5.

Here likewise, with the first two materials (material A, material B), the wall 112 corresponds to the inside wall of the outer sheath 11 of the cable 10. In contrast, with the third material (polyester), the wall 112 is in fact a polyester tape placed against the inside wall of the outer sheath 11 of the cable 10, the tape being in contact with the modules 1.

More precisely, with a wall 112 made of material A, using a lubricant in form of silicone oil makes it possible to reduce the coefficient of friction by a factor of about 2.1, the coefficient being 0.55 in the absence of lubricant and 0.26 in the presence of the lubricant. With a wall 112 of material B, the use of silicone oil makes it possible to reduce the coefficient of friction by a factor of about 2.3, the coefficient being 0.52 in the absence of lubricant and 0.23 in the presence of the lubricant. With a polyester wall 112, the use of silicone oil enables the coefficient of friction to be reduced by a factor of about 1.24, the coefficient being 0.46 in the absence of lubricant and 0.37 in the presence of the lubricant. The coefficients of friction are thus reduced by a factor lying in the range 1.24 to 2.3 in the presence of the lubricant, which constitutes a smaller reduction than that obtained with modules 1 made of PA12.

In order to increase the length of a module that it is possible to extract, it is therefore foreseen to use modules 1 made of PA12 as compared with using modules 1 made of copolyester thermoplastic elastomer.

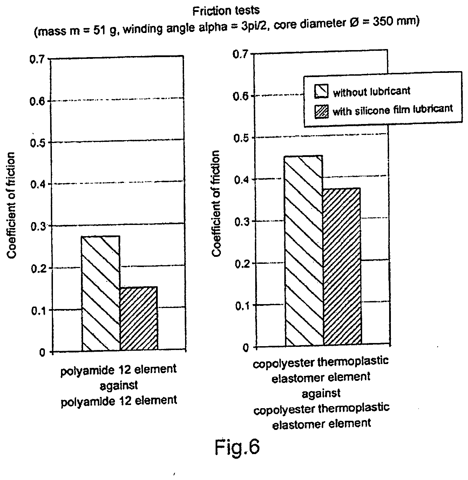

The coefficients of friction between two PA12 modules 1 or copolyester thermoplastic elastomer modules 1, in the absence of lubricant and in the presence of a lubricant in the form of silicone oil are given in Figure 6.

With PA12 modules 1, the use of silicone oil makes it possible to reduce the coefficient of friction by a factor of about 1.8, the coefficient being 0.27 in the absence of lubricant and 0.15 in the presence of the lubricant. With copolyester thermoplastic elastomer modules 1, the use of silicone oil enables the coefficient of friction to be reduced by a factor of about 1.24, the coefficient being 0.46 in the absence of lubricant and 0.37 in the presence of the lubricant. It is therefore chosen to use PA12 modules 1 with the lubricant of the invention in order to reduce the coefficient of friction between modules 1.

These experimental results tend in the same direction as those shown in Figures 4 and 5.

The materials tested for the outer sheath were various types of halogen-free flame retardant materials. Analogous results could be shown using an outer sheath made of polyethylene or of polypropylene.

In order to get a better understanding of the advantage of the invention over existing solutions, the present inventors has performed tests concerning extracting PA12 modules 1 from a cable having its sheath made of material A, with the extracted length being 80 m.

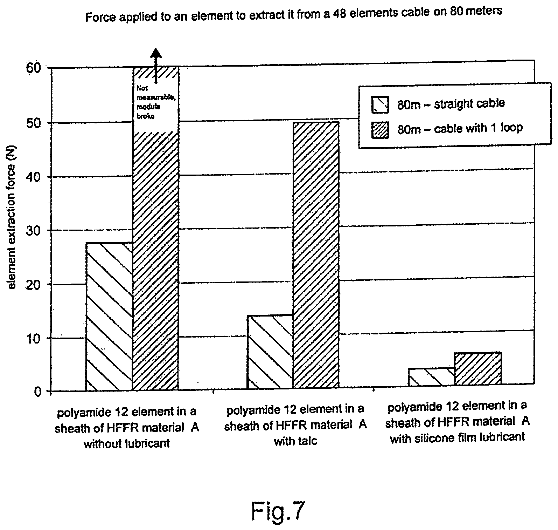

These tests are shown in Figure 7.

They were performed using a cable 10 as shown in Figure 1 and presenting the following characteristics: 48 modules 1, each having a diameter of 900 µm, disposed in a cavity 12 with a diameter of 9.1 mm. The packing ratio of the cable was thus 0.47.

Nevertheless, that type of cable was tested in three variants, and on each occasion both with the cable 10 in a rectilinear position and with the cable 10 in a position including a loop. It will be understood that the loop position presented greater resistance to extraction.

The first tested variant did not include lubricant, the second tested variant included a solid lubricant, specifically talc, and the third variant included a lubricant placed on the surfaces of the modules 1 in the form of a silicone film.

It is recalled that talc is the lubricant proposed in document EP1921478 mentioned in the introduction.

It was found that the force needed to extract a module reduces considerably firstly between the cable having no lubricant and the cable including talc, and secondly between the cable including talc as its lubricant and the cable including a lubricant implemented in accordance with the invention, and that this applies both when the cable is straight and when it is in a loop.

Forces expressed in newtons (N) are plotted up the ordinate in Figure 7.

More precisely, when considering a straight cable, the force needed for extracting a module over a length of 80 m goes from about 28 N (no lubricant) to about 13 N (talc as lubricant) and then to about 3 N (lubricant in accordance with the invention).

Furthermore, when considering a cable that includes a loop, the force needed to extract a module over a length of 80 m goes from about 49 N (talc as lubricant) to about 6 N (lubricant in accordance with the invention), i.e. a reduction of a factor of about 8. In the absence of lubricant, the module broke.

The force needed to extract a PA12 module from a cable having its outer sheath made of material A is thus divided by a factor of about 5 on going from a lubricant such as talc, which is known for this purpose, to the lubricant proposed by the invention.

The tests performed were carried out using a cable having a packing ratio of 0.47. Telecommunications cables present a packing ratio that is smaller, and that can but make it somewhat easier to extract a module as compared with the results described with reference to Figures 2 to 6.

The present inventors are also of the opinion that the advantages produced by the cable of the invention extend to a cable for which the packing ratio is somewhat higher.

## Claims

1. An optical fibre cable (10) comprising an outer sheath (11) which defines a longitudinal cavity (12) having a wall (112), wherein a plurality of elements (1) comprising at least one optical fiber extend in parallel within the cavity (12) together with a lubricant, wherein the lubricant forms a film at least partially covering the outside surface of said elements (1), and wherein the elements (1) positioned within said cavity (12) comprise a sheath, the cable being **characterised in that** the sheath is polyamide 12 and the lubricant is a silicone oil.

2. A cable (10) according to claim 1, wherein the lubricant is polydimethylsiloxane.

3. A cable (10) according to any one of the preceding claims, wherein the thickness of the film of the lubricant is less than 5 micrometers.

4. A cable (10) according to any one of the preceding claims, wherein the wall (112) of the cavity (12) is formed of a material selected from the group consisting of polyethylene, polypropylene, and a halogen-free flame retardant material.

5. A cable (10) according to any one of the claims 1-3, wherein a tape is provided for covering the inside of the wall (112), said tape being interposed between the elements (1) and the outer sheath (11), preferably the tape is a polyester tape.

6. A cable (10) according to any one of the preceding claims, wherein the packing ratio lies in the range 0.3 to 0.7, preferably in the range 0.3 to 0.5; the packing ratio being defined as the ratio of the sum of the cross-sections of all of the elements (1) divided by the section of the cavity (12).

7. A cable (10) according to any one of the preceding claims, wherein a plurality of mechanical reinforcements (13) are provided in the outer sheath (11), extending along the axis of the cable.

8. A cable (10) according to any one of the preceding claims, wherein the elements (1) are optical modules, each comprising at least one optical fiber.

9. A method of fabricating a cable (10) according to any one of claims 1 to 8, **characterized in that** the method comprises a step consisting in forming a film of a silicone oil, said film covering, at least in part, the outside surface of elements (1), which elements (1) extend in parallel in a longitudinal cavity (12) which is formed by an outer sheath (11) of said cable (10).

10. An method of fabrication according to claim 9, wherein the step of forming the film of the silicone oil comprises the substeps consisting in:
• causing the elements (1) to pass through a mist of fine droplets formed from a stabilized emulsion of the silicone oil in water; and
• evaporating the water or waiting for it to evaporate.

11. A method of fabrication according to claim 10, wherein the mist of fine droplets is formed from an emulsion comprising:
• water representing at least 95% by volume of the emulsion;
• the silicone oil, representing 1% to 2% by volume of the emulsion;
• a stabilizing agent representing 1% to 2% by volume of the emulsion.

## Patentansprüche

1. Ein optisches Faserkabel (10), welches einen äußeren Mantel (11), der einen längs verlaufenden Hohlraum (12) mit einer Wandung (112) definiert, umfasst, wobei eine Vielzahl von Elementen (1) mindestens eine optische Faser, die sich parallel in dem Hohlraum (12) erstreckt/erstrecken, zusammen mit einem Gleitmittel umfasst, wobei das Gleitmittel einen Film bildet, der die äußere Oberfläche dieser Elemente (1) wenigstens teilweise bedeckt, und wobei die in diesem Hohlraum (12) angeordneten Elemente (1) einen Mantel umfassen, wobei das Kabel **dadurch gekennzeichnet ist, dass** der Mantel aus Polyamid 12 ist und das Gleitmittel ein Siliconöl ist.

2. Ein Kabel (10) nach Anspruch 1, wobei das Gleitmittel Polydimethylsiloxan ist.

3. Ein Kabel (10) nach einem der vorhergehenden Ansprüche, wobei die Dicke des Gleitmittelfilms weniger als 5 Mikrometer beträgt.

4. Ein Kabel (10) nach einem der vorhergehenden Ansprüche, wobei die Wandung (112) des Hohlraums (12) aus einem Material gebildet ist, das aus der Gruppe ausgewählt ist, die aus Polyethylen, Polypropylen und einem halogenfreien Flammschutzmittel besteht.

5. Ein Kabel (10) nach einem der Ansprüche 1 bis 3, wobei ein Band, das zwischen den Elementen (1) und dem äußeren Mantel (11) eingelegt ist und vorzugsweise aus Polyester besteht, zum Bedecken der Innenseite der Wandung (112) vorgesehen ist.

6. Ein Kabel (10) nach einem der vorhergehenden Ansprüche, wobei das Packungsverhältnis in einem Bereich von 0,3 bis 0,7, vorzugsweise in einem Bereich von 0,3 bis 0,5 liegt und als das Verhältnis der Summe der Querschnitte sämtlicher Elemente (1), dividiert durch den Querschnitt des Hohlraums (12), definiert ist.

7. Ein Kabel (10) nach einem der vorhergehenden Ansprüche, wobei in dem äußeren Mantel (11) eine Vielzahl von mechanischen Verstärkungen (13) vorgesehen ist, die sich entlang der Kabelachse erstrecken.

8. Ein Kabel (10) nach einem der vorhergehenden Ansprüche, wobei die Elemente (1) optische Module sind, die jeweils mindestens eine optische Faser umfassen.

9. Ein Verfahren zur Herstellung eines Kabels (10) nach einem der Ansprüche 1 bis 8, **dadurch gekennzeichnet, dass** das Verfahren einen Schritt umfasst, der aus der Bildung eines Films aus einem Siliconöl besteht, wobei dieser Film wenigstens teilweise die äußere Oberfläche der Elemente (1) bedeckt, die sich parallel in einem längs verlaufenden Hohlraum (12) erstrecken, der von einem äußeren Mantel (11) dieses Kabels (10) gebildet wird.

10. Ein Herstellungsverfahren nach Anspruch 9, wobei der Schritt der Bildung des Films aus Siliconöl folgende Unterschritte umfasst, die aus:
• Laufen lassen der Elemente (1) durch einen Nebel aus feinen Tröpfchen, die aus einer stabilisierten Emulsion des Siliconöls in Wasser gebildet worden sind, und
• Verdampfen des Wassers oder Warten, bis es verdampft ist,
bestehen.

11. Ein Herstellungsverfahren nach Anspruch 10, wobei der Nebel aus feinen Tröpfchen aus einer Emulsion, die:
• Wasser, das mindestens 95 Vol.-% der Emulsion ausmacht,
• das Siliconöl, das 1 Vol.-% bis 2 Vol.-% der Emulsion ausmacht, und
• ein Stabilisierungsmittel, das 1 Vol.-% bis 2 Vol.-% der Emulsion ausmacht,
umfasst, gebildet worden ist.

## Revendications

1. Câble à fibres optiques (10) comprenant une gaine extérieure (11) qui définit une cavité longitudinale (12) ayant une paroi (112), où une pluralité d'éléments (1) comprenant au moins une fibre optique s'étendent parallèlement dans la cavité (12) conjointement avec un lubrifiant, où le lubrifiant forme un film couvrant au moins partiellement la surface extérieure desdits éléments (1), et où les éléments (1) positionnés dans ladite cavité (12) comprennent une gaine, le câble étant **caractérisé en ce que** la gaine est en polyamide 12 et le lubrifiant est une huile de silicone.

2. Câble (10) selon la revendication 1, dans lequel le lubrifiant est le polydiméthylsiloxane.

3. Câble (10) selon l'une quelconque des revendications précédentes, dans lequel l'épaisseur du film de lubrifiant est inférieure à 5 micromètres.

4. Câble (10) selon l'une quelconque des revendications précédentes, dans lequel la paroi (112) de la cavité (12) est formée d'un matériau choisi dans le groupe constitué par le polyéthylène, le polypropylène et un matériau ignifugeant exempt d'halogène.

5. Câble (10) selon l'une quelconque des revendications 1 à 3, dans lequel une bande est prévue pour couvrir l'intérieur de la paroi (112), ladite bande étant interposée entre les éléments (1) et la gaine extérieure (11), de préférence la bande est une bande de polyester.

6. Câble (10) selon l'une quelconque des revendications précédentes, dans lequel le taux de remplissage se trouve dans la plage allant de 0,3 à 0,7, de préférence de 0,3 à 0,5 ; le taux de remplissage étant défini comme le rapport de la somme des sections transversales de tous les éléments (1) divisée par la section de la cavité (12).

7. Câble (10) selon l'une quelconque des revendications précédentes, dans lequel une pluralité de renforts mécaniques (13) sont prévus dans la gaine extérieure (11), s'étendant le long de l'axe du câble.

8. Câble (10) selon l'une quelconque des revendications précédentes, dans lequel les éléments (1) sont des modules optiques, comprenant chacun au moins une fibre optique.

9. Procédé de fabrication d'un câble (10) selon l'une quelconque des revendications 1 à 8, **caractérisé en ce que** le procédé comprend une étape consistant à former un film d'une huile de silicone, ledit film couvrant, au moins en partie, la surface extérieure des éléments (1), lesquels éléments (1) s'étendent parallèlement dans une cavité longitudinale (12) qui est formée par une gaine extérieure (11) dudit câble (10).

10. Procédé de fabrication selon la revendication 9, dans lequel l'étape de formation du film de l'huile de silicone comprend les sous-étapes consistant :
- à faire passer les éléments (1) à travers un brouillard de fines gouttelettes formé à partir d'une émulsion stabilisée de l'huile de silicone dans l'eau ; et
- à évaporer l'eau ou attendre qu'elle s'évapore.

11. Procédé de fabrication selon la revendication 10, dans lequel le brouillard de fines gouttelettes est formé à partir d'une émulsion comprenant :
- de l'eau représentant au moins 95% en volume de l'émulsion ;
- de l'huile de silicone, représentant 1% à 2% en volume de l'émulsion ;
- un agent stabilisant représentant 1% à 2% en volume de l'émulsion.
